# EUROPEAN PATENT SPECIFICATION

(11) **EP 1 929 461 B1**
(45) Date of publication and mention of the grant of the patent: **25.03.2009**
(21) Application number: 06779613.6
(22) Date of filing: 24.08.2006
(51) Int. Cl.: G09F 21/04

(54) **DISPLAY DEVICE**
ANZEIGEEINRICHTUNG
DISPOSITIF D'AFFICHAGE

(30) Priority: 24.08.2005 GB 0517308
(43) Date of publication of application: 11.06.2008
(73) Proprietor: Eyelevel Limited, The Old Dairy Barn, B184 Dunmow Road Beauchamp Roding, Essex CM5 0PF (GB)
(72) Inventor: DELAMERE, Matthew, Robert, Essex CM5 0PF (GB)
(74) Representative: Gillam, Francis Cyril
(86) International application number: PCT/GB2006/050259
(87) International publication number: WO 2007/023318

(56) References cited:
- EP-A2- 0 922 413
- DE-A1- 19 847 366
- GB-A- 376 953
- US-A1- 2001 009 347

## Description

This invention relates to a display device, and more specifically to a display device adapted for use on a vending trolley suitable for wheeling between rows of seats on public transport vehicles.

Many forms of public transport, and principally aircraft and trains, utilise vending trolleys that are wheeled along the aisles between the rows of the seats to serve the seated customers. On aircraft and trains, food and drinks are served from such trolleys and on aircraft, the trolleys are also used for the sale of goods such as duty free items and gifts. During take off and landing in an aircraft, there are strict regulations regarding the storage of goods for sale, and only limited space in the galley where the goods may be stored. Currently, the items for sale must be stored within the trolley and arranged on top of the trolley when being offered for sale. Vending trolleys used in aircrafts and trains are known from EP0922413 and US2001/009347.

There is a commercial advantage to the airline operators to provide advertising space to maximise revenue from the sales of in-flight goods. However, advertisements are rarely if ever applied to the trolley itself as individual aircraft (and therefore trolleys) are flown to a variety of destinations where different advertisements will be applicable - for example it would depend on the destination of a flight whether or not duty free shopping is available.

Therefore it is an object of the present invention to provide a display device that may be safely stored for take off and landing and yet may quickly and easily be displayed on the trolley, providing areas for carrying advertisements at eye level to the seated passengers.

Therefore there is provided a display device for use in conjunction with a vending trolley adapted for wheeling between rows of seats on public transport, which vending trolley has an internal compartment having a generally rectangular horizontal cross-section, an upper surface and generally vertical side faces, said display device comprising a tray having a base and opposed pairs of upstanding side and end walls, the tray being proportioned to fit within the internal compartment for storage when not in use and to rest on the upper surface of the vending trolley between the side faces when in use; a first generally rectangular elongate link plate hinged by one long edge to one side wall of the tray; and an advertising panel hinged to the opposed long edge of the link plate, whereby the tray may be stored in the compartment with the advertising panel hinged to a position where the panel overlies the base of the tray, and for use the tray is removed from the compartment and placed on the upper surface of the trolley, and the link plate and advertising panel are hinged down so that the advertising panel hangs down from the link plate to lie alongside an adjacent side face of the trolley, whereby the advertising panel is exposed to passengers seated on the public transport.

While this invention is primarily intended for use on aircraft, it will find utility with any trolley used on various forms of public transport such as trains, coaches, ferries, hovercraft and buses.

The present invention is designed for use on a standard vending trolley comprising a generally rectangular horizontal cross-section, with an internal compartment for the storage of goods, trays and the like. Such a trolley has an upper surface for carrying articles, and the tray of the display device of this invention is proportioned to fit within the internal compartment of the trolley for storage when not in use and to rest on the upper surface of the vending trolley when in use.

The vending trolley may be wheeled between rows of seats or along the aisles between rows of seats, depending on the seating arrangement of the aircraft or vehicle.

In order that advertising space is provided, a first generally rectangular elongate link plate is hinged by one long edge to one side wall of the tray, and an advertising panel is hinged to the opposed long edge of the link plate. Preferably the elongate link plate is hinged approximately halfway up the side wall of the tray, but it may of course be hinged at any place up the wall. Although the link plate may be constructed from a single panel, it is preferred that the link plate is formed from two or more link panels joined by hinges or other pivots. A first link panel is hinged to the side wall, and a second link panel is hinged to the first link panel, to which second link panel is hinged the advertising panel. Both the link plate and the advertising panel provide suitable space where advertisements may be placed. Such advertisements will preferably be removable, and attached to the plate and panel by simple clips, folders, grooves or low-tack adhesives. Of course, any suitable means for removably attaching an advertisement to the plate and panel may be employed.

During take off and landing, the tray is stored in the compartment of the trolley with the advertising panel overlying but spaced from the base of the tray, serving as a lid. When in use, the tray is removed from the compartment and placed on the upper surface of the vending trolley. The link plate and advertising panel are hinged down so that the advertising panel hangs down from the link plate to lie alongside an adjacent side face of the trolley. The advertisements displayed on the link plate and the advertising panel will then be exposed to seated passengers on the public transport vehicle.

The combined height of the link plate and the side wall of the tray beneath the hinge where the plate is attached is preferably substantially equal to the height of the adjacent tray end wall, whereby the advertising panel may be hinged to a storage position overlying the upper edges of the end walls, spaced from the base.

The size and shape of the advertising panel preferably should substantially correspond to the size and shape of base of the tray whereby the advertising panel forms a lid for the tray when the panel is folded to overlie the base of the tray.

To allow advertisements to be visible to passengers seated on both sides of an aisle along which the trolley is wheeled, the display device will preferably further comprise a second elongate link plate hinged to the opposed side wall of the tray usually in an equivalent position to that of the first link plate. A second advertising panel is hinged to the other long edge of the second elongate link plate. However, as with the first link plate, the second link plate may be divided into two link panels hinged together. As with the first link plate and advertising board, the combined height of the second link plate and the side wall of the tray to which the plate is hinged is preferably substantially equal to the height of the adjacent tray end wall. The two advertising panels when hinged to a storage position overlying the upper edges of the end walls, will immediately overlie each other.

The size and shape of the second advertising panel should preferably substantially correspond to the size and shape of base of the tray, but one of the advertising panels is preferably slightly smaller than the other and will be folded first over the base. The second advertising panel is preferably provided with an inwardly disposed lip around the periphery thereof so that when folded over said first advertising panel the lip surrounds the edges of the first panel and the tray.

Preferably, the trolley with which the display device is used has a pair of upstanding lips extending along the opposed long edges of the top surface. The tray should have a suitable width to fit between the lips when located on the top surface, with the or each link plate extending over the adjacent upstanding lip. Generally, two upstanding lips on opposed long edges of the upper surface of the trolley should be provided, but those lips may be part of a single lip extending around and upstanding from the periphery of said upper surface of the trolley to assist retention of the device on the upper surface.

In order to support and display the goods held therein, the display device preferably has an insert receivable within the tray. One possibility is that the insert comprises a point of sale display structure such as a multi-compartment inner tray with raised dividers, or a multi-level tray that may be adapted to fold between flat and multi-level configurations. These trays may be moulded from plastics material and be of suitable dimensions for snug fitting within the tray. Alternatively, the point of sale display structure could simply comprise an advertising sign, with the goods for sale arranged therearound.

To provide additional advertising space there may be a signboard supported by two upstanding bars attached to the tray. Preferably the upstanding bars are pivotally attached to the tray for hinging movement between erected and folded-down positions, or more preferably attached to an end wall, so that the signboard and upstanding bars will pivot to lie within or against the tray when not in use.

Preferably, at least one end wall includes a hinged flap whereby access to the interior of the tray may be gained through an opening defined by hinging of the flap. Folding down this flap also makes it easier for the passengers to view the goods on sale.

One embodiment of the present invention will now be described by way of example only, with reference to the accompanying drawings, in which:
**Figure 1** is a plan view of a display device according to the present invention in an open position ready for use;
**Figure 2** is a side view of the display device in the open position;
**Figure 3** is an end view of the display device in the open position;
**Figure 4** shows two display devices located on top of a trolley shown diagrammatically, both display devices being in their open positions;
**Figure 5** shows two display devices folded into their in the closed positions and located within the trolley;
**Figure 6** shows an alternative internal sub-tray; and
**Figure 7** shows a point of sale device.

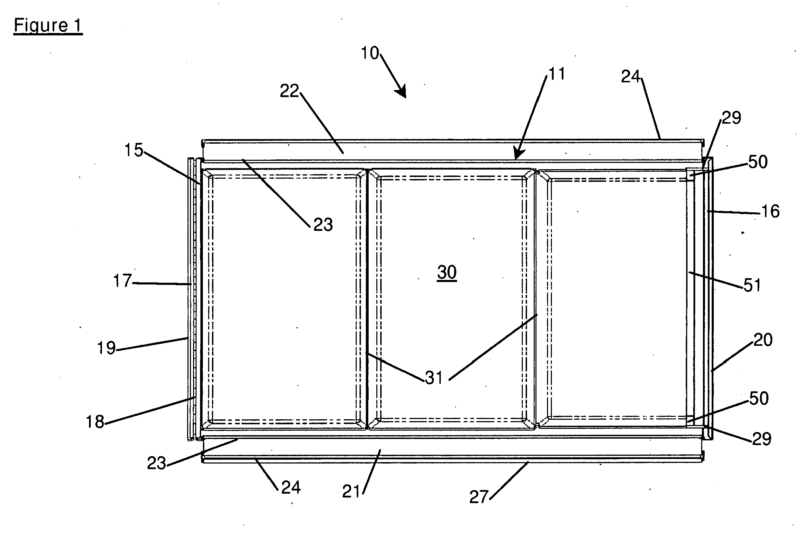

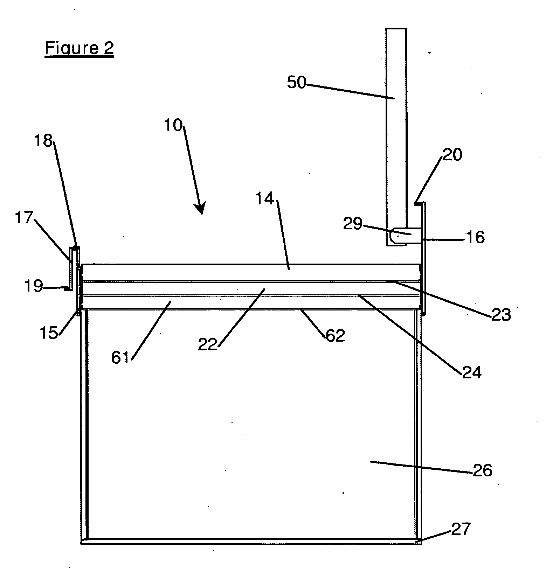

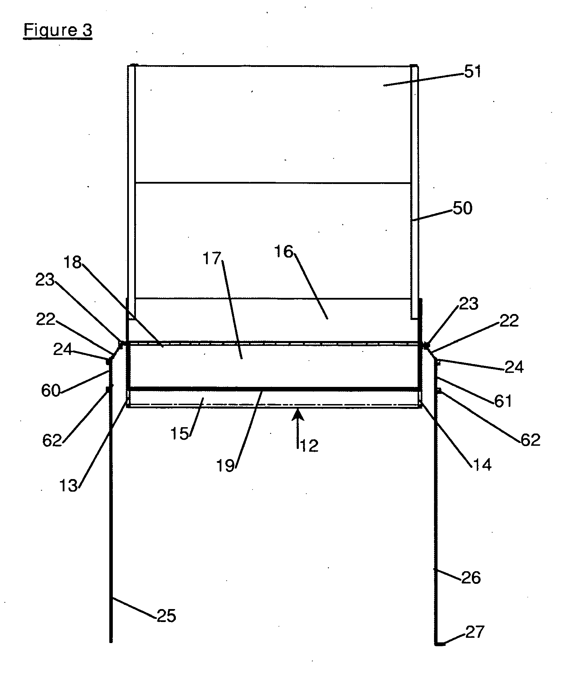

With reference initially to Figures 1, 2 and 3, there is shown a display device generally indicated 10, for use in conjunction with a vending trolley such as may be employed on an aircraft, for wheeling along an aisle between rows of seats. The display device comprises a tray, generally indicated 11, having a rectangular base 12 with a pair of opposed side edges and opposed front and back side edges.

Upstanding from the front edge is a low end wall 15 and from the back edge a high end wall 16, and upstanding from the side edges are side walls 13, 14. Attached by hinge 18 to the low end wall 15 is a flap 17 and extending along the top edge thereof is an inwardly disposed lip 19. The flap 17 has a length substantially equal to the length of the low end wall 15, and a width when combined with the height of the low end wall 15 is substantially equal to the height of the high end wall 16. An inwardly directed lip 20 extends along the top edge of high end wall 16.

Respective opposed advertising panels 25, 26 are hingedly attached to the side walls 13, 14 of the tray 11 by elongate link plates. The elongate link plates comprise respective opposed elongate first link panels 21, 22 and are connected by hinges 23 to the middle of the opposed long side walls 13, 14, each first link panel having a length substantially equal to the length of the long side walls 13, 14. One edge of each respective elongate first link panel 21, 22 is connected by hinge 24 to the a long edge of a respective adjacent second link panel 60, 61, each second link panel also having a length substantially equal to the length of the long side walls 13, 14. The width of the first and second panels 21, 22 and 60, 61 when combined with the height of the long side walls 13, 14 beneath hinge 23 is substantially equal to the height of the high end wall 16. Connected to the opposed long edge of each second link plate 60, 61 by a further hinge 62 are rectangular advertising panels 25, 26. Advertising panel 25 has an area slightly smaller than the area of the base 12, and advertising panel 26 has an area slightly greater than the area of the base 12. Projecting from the periphery of the edges of advertising panel 26 is a lip 27 so that when advertising panel 26 is folded on top of the tray 11, the lip will be able to surround the edges of said tray. The link panels of the link plates, as well as the advertising panels 25, 26 all provide areas on which may be carried advertising material of potential interest to passengers seated in the public conveyance, such as an aircraft.

Arranged within the tray 11 is insert 30, in which items to be sold are stored and presented. The length and width of insert 30 is of a dimension that fits snugly within the tray 11. The insert 30 is comprised of a single moulded plastic tray, with two raised dividers 31 that separate the tray into three compartments into which a variety of goods may be held.

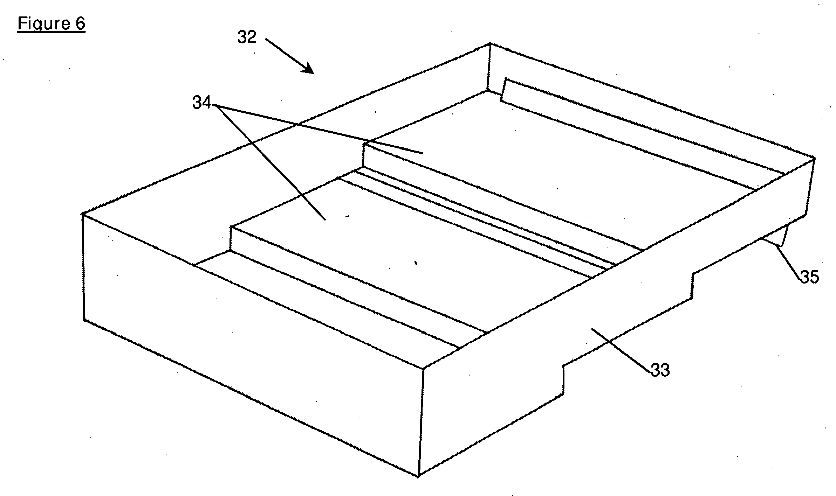

Figure 6 shows a different embodiment of the insert taken out of the tray 11 and generally indicated 32. It consists of a moulded plastic tray 33 and comprises three terraces generally indicated 34 to present the goods held within at different elevations. The tray 33 is supported by a wire stand 35.

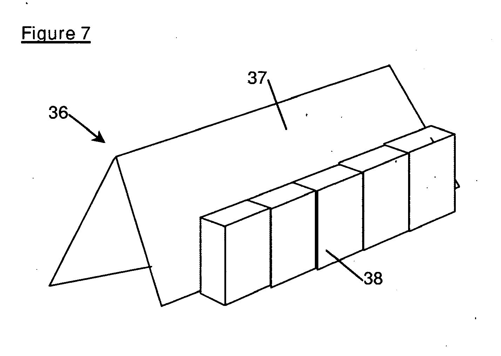

Figure 7 shows a point-of-sale display 36 to replace the insert consisting of a piece of folded card 37 that upstands from the base 12 of the tray 11 and provides two surfaces where advertisements may be placed. Products 38, such as perfumes and gifts that are advertised on the card 37 are placed alongside the card 37. When the display device 10 is folded away, the card 37 can be folded together and placed in the tray 11 for storage.

Attached to the high end wall 16 by a pivot 29 are two upstanding bars 50, supporting a signboard 51 for the provision of advertising space. The upstanding bars 50 are mounted so that said bars 50 and the signboard 51 may be folded down into the tray 11 to overlie the insert 30 when the display device is to be stored.

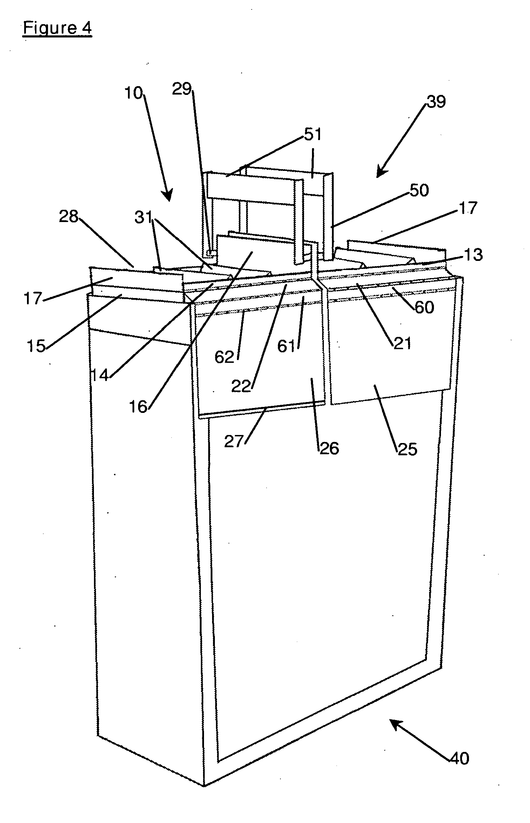

In use on a large trolley 40, as best shown in Figure 4, there is enough space on the upper surface 41 of said trolley 40 for an identical second display device generally indicated 39 to be used in conjunction with the display device 10. Because both display units in this embodiment are identical, for simplicity identical reference numerals will be used for the components of each display device. The two display devices 10, 39 are placed on top of a vending trolley, generally indicated 40. The two display devices are arranged back-to-back, so that the high end walls 16 of each display device 10, 39 are together. Alternatively, although not represented in the diagrams, a single device 10 may be placed on the upper surface 41 of a trolley, such as when a smaller trolley is used.

The trolley 40 comprises a generally rectangular cross section with an upper surface 41 and long side walls 42 and short side walls 43. Defined within the walls 42, 43 of the trolley 40 is a storage space generally indicated 44, accessible by opening door 45. Arranged on the inside of long side walls 42 of the storage space 44 are parallel rails 46 to support items stowed therein, such as food trays and duty free storage trays.

The display devices 10 and 39 are placed on the upper surface of the trolley 41. Surrounding the perimeter of the upper surface 41 is an upstanding lip 47. The display devices 10, 39 are of a dimension so that they fit snugly within the upstanding lip 47 to prevent unwanted movement during travel. In this position, the upstanding bars 50, supporting the signboard 51 are raised to a vertical plane, and the flap 17 is lowered so that members of the public will be able to get a clearer view of the goods in internal sub-tray 30. The elongate first link panels 21, 22 hang from the middle of the long side walls 13, 14 and the first link panels 21, 22 rest against the edge of the upstanding lip 47. The second link panels 60, 61 and advertising panels 25, 26 then hang down alongside the long side walls 42 of the trolley 40, so that when the trolley 40 is pushed on wheels (not shown) down the aisles of an aircraft, members of the public sat down will be at eye level with the panels 25 and 26 and second link panels 60, 61. They will then be able to see any advertisements presented on these panels

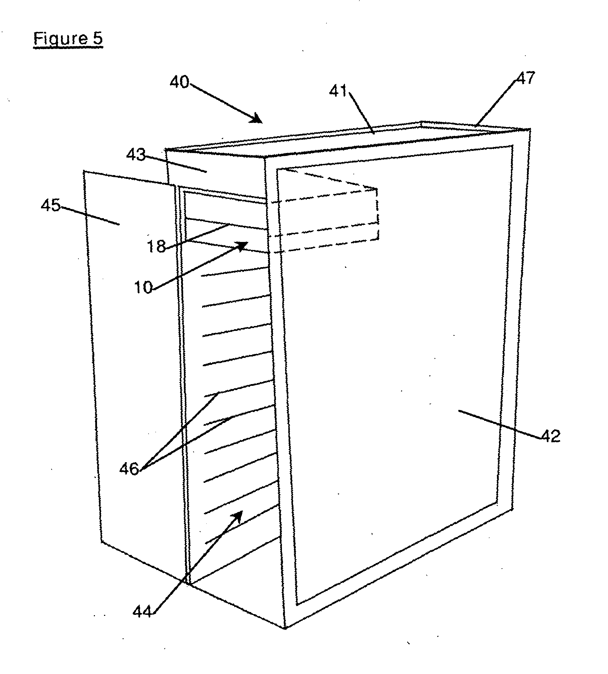

When put into the closed position for storage within the trolley 40, as shown in Figure 5, the flap 17 is raised about hinges 18 to a vertical position to be level in height with high end wall 16. The advertising panel 25 is then pulled over the top of the tray 11, so that the first link panel 21 rotates about hinge 23 until the link panel 21 is vertical and resting against the section of side wall 13 above hinge 23, and second link panel 60 rotates about hinge 24 until the second link panel is vertical. The combined height of the side wall 13 beneath hinge 23 and first and second link panels 21 and 60 are level in height with high end wall 16. The advertising panel 25 then rests on the inwardly disposed lips 19 and 20 of flap 17 and high end wall 16 respectively. The second advertising panel 26 is then pulled over the top of the tray 11 and advertising panel 25, so that the other first link panel 22 rotates about hinge 23 until the other first link panel 22 is vertical, resting against the section of side wall 14 above hinge 23, and second link panel 61 rotates about hinge 24 until the second link panel is vertical. The combined height of the side wall 14 beneath hinge 23 and first and second link panels 22 and 60, are level in height with high end wall 16. The lip 27 then encloses the four side walls of tray 11 and secures them in place. The closed tray 11 can then be inserted in trolley 40, and the door 45 closed shut for safe storage during landing and take-off.

## Claims

1. A display device (10) for use in conjunction with a vending trolley (40) adapted for wheeling between rows of seats on public transport, which vending trolley has an internal compartment (44) having a generally rectangular horizontal cross-section, an upper surface (41) and generally vertical side faces (42, 43), said display device (10) comprising a tray (11) having a base (12) and opposed pairs of upstanding side (13, 14) and end (15, 16) walls, the tray being proportioned to fit within the internal compartment (44) for storage when not in use and to rest on the upper surface of the vending trolley (40) between the side faces (42, 43) when in use; a first generally rectangular elongate link plate (21, 22) hinged by one long edge to one side wall (13, 14) of the tray; and an advertising panel (25) hinged to the opposed long edge of the link plate (21, 22), whereby the tray (11) may be stored in the compartment (44) with the advertising panel (25) hinged to a position where the panel overlies the base (12) of the tray, and for use the tray (11) is removed from the compartment (44) and placed on the upper surface (41) of the trolley, and the link plate (21, 22) and advertising panel (25) are hinged down so that the advertising panel (25) hangs down from the link plate to lie alongside an adjacent side face of the trolley, whereby the advertising panel (25) is exposed to passengers seated on the public transport.

2. A display device (10) as claimed in claim 1, wherein the combined height of the link plate and the side wall (13) of the tray (11) to which the plate is hinged is substantially equal to the height of the adjacent tray end wall, whereby the advertising panel (25) may be hinged to a storage position overlying the upper edges of the end walls, spaced from the base.

3. A display device (10) as claimed in claim 1 or claim 2 wherein the link plate comprises two or more elongate link panels hinged together.

4. A display device as claimed in any of the preceding claims, wherein the shape and size of the advertising panel (25) substantially corresponds to the shape and size of the base (12) of the tray (11).

5. A display device (10) as claimed in any of the preceding claims, wherein there is provided a second elongate link plate hinged to the upper edge of the opposed side wall of the tray (11), with a second advertising panel (26) hinged to the other long edge of the second elongate link plate.

6. A display device (10) as claimed in claim 5, wherein the combined height of the second link plate and the opposed side wall of the tray to which the second link plate is hinged is substantially equal to the height of the adjacent tray end wall, whereby the advertising panel (26) may be hinged to a storage position overlying the upper edges of the end walls, spaced from the base (12).

7. A display device (10) as claimed in claim 5 or claim 6 wherein the second link plate comprises two or more elongate link panels hinged together.

8. A display device (10) as claimed in claim 4, wherein the two advertising panels (25, 26) when hinged to their respective storage positions immediately overlie each other.

9. A display device (10) as claimed in any of the preceding claims and for use with a trolley (40) having a pair of upstanding lips extending along the opposed long edges of the top, wherein the tray (11) has a suitable width to fit between the upstanding lips when located on the top surface, with the or each link plate extending over the adjacent upstanding lip.

10. A display device (10) as claimed in any of the preceding claims and further comprising an insert receivable within the tray (12), for display or storage of goods.

11. A display device (10) as claimed in claim 8 wherein the insert comprises a point of sale display structure having a multi-compartment inner tray with raised dividers, or a multi-level tray adapted for folding between flat and multi level configurations.

12. A display device (10) as claimed in any of the preceding claims, wherein a signboard is provided, supported by two upstanding bars attached to the tray (11).

13. A display device (10) as claimed in claim 12, wherein the upstanding bars are pivotally attached to the tray for hinging movement between erected and folded-down positions.

14. A display device (10) as claimed in claim 12, wherein the upstanding bars are pivotally attached to an end wall.

15. A display device (10) as claimed in claim 12 to claim 14 wherein the signboard and upstanding bars will pivot to lie within or against the tray when not in use.

16. A display device (10) as claimed in any of the preceding claims, wherein at least one end wall includes a hinged flap whereby access to the interior of the tray may be gained through an opening defined by hinging of the flap.

17. In combination, a trolley (40) having a generally rectangular horizontal cross-section and an internal compartment for the storage of goods, an upper surface, and a display device (10) as claimed in any of claims 1 to 16, wherein the tray (11) is receivable in the internal compartment of the trolley (40) when the or each advertising panel has been folded to overlie the base (12) of the tray (11), the tray being removable from the internal compartment and placed on the trolley (40) upper surface when the tray is to be used, with the advertising panel hinged to hang down from the link plate to lie alongside an adjacent side face of the trolley, whereby the advertising panel is exposed to passengers seated on the public transport.

## Patentansprüche

1. Anzeigeeinrichtung (10) zur Verwendung in Verbindung mit einem Verkaufswagen (40), der ausgestaltet ist, um zwischen zwei Sitzreihen in öffentlichen Verkehrsmitteln gerollt zu werden, wobei der Verkaufswagen ein inneres Abteil (44) mit einem im Wesentlichen rechteckigen horizontalen Querschnitt, eine obere Fläche (41) und im Wesentlichen vertikale Seitenflächen (42, 43) hat, wobei die Anzeigeeinrichtung (10) eine Ablage (11) mit einer Basis (12) und gegenüberliegenden Paaren von hochstehenden Seitenwänden (13, 14) und Endwänden (15, 16) aufweist, wobei die Ablage bemessen ist, um in das innere Abteil (44) zu passen, um dort aufbewahrt zu werden, wenn sie nicht verwendet wird, und um auf der oberen Fläche des Verkaufswagens (40) zwischen den Seitenflächen (42, 43) abgelegt zu werden, wenn sie verwendet wird; wobei eine erste, im Wesentlichen rechteckige, längliche Verbindungsplatte (21, 22) durch eine lange Kante an einer Seitenwand (13, 14) der Ablage angelenkt ist; und wobei eine Werbetafel (25) an der gegenüberliegenden langen Kante der Verbindungsplatte (21, 22) angelenkt ist, wodurch die Ablage (11) in dem Abteil (44) aufbewahrt werden kann, wobei die Werbetafel (25) in eine Position geklappt ist, in der die Tafel über der Basis (12) der Ablage liegt, und wobei die Ablage (11) zwecks Verwendung aus dem Abteil (44) herausgenommen und auf der oberen Fläche (41) des Wagens platziert wird, und die Verbindungsplatte (21, 22) und die Werbetafel (25) nach unten geklappt sind, so dass die Werbetafel (25) von der Verbindungsplatte nach unten hängt, um entlang einer benachbarten Seitenfläche des Wagens zu liegen, wodurch die Werbetafel (25) für Passagiere frei sichtbar ist, die in dem öffentlichen Verkehrsmittel sitzen.

2. Anzeigeeinrichtung (10) nach Anspruch 1, wobei die kombinierte Höhe der Verbindungsplatte und der Seitenwand (13) der Ablage (11), an der die Platte angelenkt ist, im Wesentlichen gleich der Höhe der benachbarten Endwand der Ablage ist, wodurch die Werbetafel (25) in eine Aufbewahrungsposition geklappt werden kann, in der sie über den oberen Kanten der Endwände, beabstandet von der Basis, liegt.

3. Anzeigeeinrichtung (10) nach Anspruch 1 oder Anspruch 2, wobei die Verbindungsplatte zwei oder mehr längliche Verbindungsplatten aufweist, die gelenkig miteinander verbunden sind.

4. Anzeigeeinrichtung nach einem der vorhergehenden Ansprüche, wobei die Form und Größe der Werbetafel (25) im Wesentlichen der Form und Größe der Basis (12) der Ablage (11) entsprechen.

5. Anzeigeeinrichtung (10) nach einem der vorhergehenden Ansprüche, wobei eine zweite längliche Verbindungsplatte vorgesehen ist, die an der oberen Kante der gegenüberliegenden Seitenwand der Ablage (11) angelenkt ist, wobei eine zweite Werbetafel (26) an der anderen langen Kante der zweiten länglichen Verbindungsplatte angelenkt ist.

6. Anzeigeeinrichtung (10) nach Anspruch 5, wobei die kombinierte Höhe der zweiten Verbindungsplatte und der gegenüberliegenden Seitenwand der Ablage, an der die zweite Verbindungsplatte angelenkt ist, im Wesentlichen gleich der Höhe der benachbarten Endwand der Ablage ist, wodurch die Werbetafel (26) in eine Aufbewahrungsposition geklappt werden kann, in der sie über den oberen Kanten der Endwände, beabstandet von der Basis (12), liegt.

7. Anzeigeeinrichtung (10) nach Anspruch 5 oder Anspruch 6, wobei die zweite Verbindungsplatte zwei oder mehr längliche Verbindungsplatten aufweist, die gelenkig miteinander verbunden sind.

8. Anzeigeeinrichtung (10) nach Anspruch 4, wobei die beiden Werbetafeln (25, 26), wenn sie in ihre jeweiligen Aufbewahrungspositionen geklappt sind, unmittelbar übereinander liegen.

9. Anzeigeeinrichtung (10) nach einem der vorhergehenden Ansprüche und zur Verwendung mit einem Wagen (40), mit einem Paar von hochstehenden Lippen, die sich entlang der gegenüberliegenden langen Kanten der Oberseite erstrecken, wobei die Ablage (11) eine geeignete Breite hat, um zwischen die hochstehenden Lippen zu passen, wenn sie sich auf der oberen Fläche befindet, wobei sich die oder jede Verbindungsplatte über die benachbarte hochstehende Lippe erstreckt.

10. Anzeigeeinrichtung (10) nach einem der vorhergehenden Ansprüche, und außerdem mit einem Einsatz, der in der Ablage (11) eingesetzt werden kann, um Waren zu präsentieren oder aufzubewahren.

11. Anzeigeeinrichtung (10) nach Anspruch 8, wobei der Einsatz eine Verkaufspräsentationsstruktur mit einer inneren Ablage mit mehreren Abschnitten mit hochstehenden Trennmitteln oder einer Ablage aus mehreren Etagen aufweist, die ausgestaltet ist, um zwischen einer flachen Konfiguration und einer Konfiguration aus mehreren Etagen gefaltet zu werden.

12. Anzeigeeinrichtung (10) nach einem der vorhergehenden Ansprüche, wobei ein Firmenschild vorgesehen ist, das durch zwei hochstehende Träger abstützend gehalten ist, die an der Ablage (11) angebracht sind.

13. Anzeigeeinrichtung (10) nach Anspruch 12, wobei die hochstehenden Träger für eine gelenkige Bewegung zwischen hochstehenden und nach unten geklappten Positionen schwenkbar an der Ablage angebracht sind.

14. Anzeigeeinrichtung (10) nach Anspruch 12, wobei die hochstehenden Träger schwenkbar an einer Endwand angebracht sind.

15. Anzeigeeinrichtung (10) nach Anspruch 12 oder Anspruch 14, wobei das Firmenschild und die hochstehenden Träger geschenkt werden, um in oder gegen die Ablage zu liegen, wenn sie nicht verwendet werden.

16. Anzeigeeinrichtung (10) nach einem der vorhergehenden Ansprüche, wobei mindestens eine Endwand eine gelenkige Klappe aufweist, wodurch Zugriff auf das Innere der Ablage durch eine Öffnung erreicht werden kann, die durch Aufklappen der Klappe gebildet ist.

17. Kombination aus einem Wagen (40), der einen im Wesentlichen rechteckigen horizontalen Querschnitt und ein inneres Abteil für die Aufbewahrung von Waren, eine obere Fläche und eine Anzeigeeinrichtung (10) nach einem der Ansprüche 1 bis 16 aufweist, wobei die Ablage (11) in dem inneren Abteil des Wagens (40) aufgenommen werden kann, wenn die oder jede Werbetafel geklappt ist, um über der Basis (12) der Ablage (11) zu liegen, wobei die Ablage aus dem inneren Abteil herausnehmbar ist und auf der oberen Fläche des Wagens (40) platziert ist, wenn die Ablage verwendet werden soll, wobei die Werbetafel geklappt ist, um von der Verbindungsplatte nach unten zu hängen, um entlang einer benachbarten Seitenfläche des Wagens zu liegen, wodurch die Werbetafel für Passagiere frei sichtbar ist, die in dem öffentlichen Verkehrsmittel sitzen.

## Revendications

1. Dispositif d'affichage (10) pour son utilisation en conjonction avec un chariot de distribution (40) adapté pour rouler entre les rangées de sièges d'un moyen de transport public, lequel chariot de distribution ayant un compartiment interne (44) ayant une section transversale d'une manière générale horizontale rectangulaire, une surface supérieure (41) et des faces latérales d'une manière générale verticales (42, 43), ledit dispositif d'affichage (10) comprenant un plateau (11) ayant une base (12) et des paires opposées de parois latérales (13, 14) et d'extrémités (15, 16) en élévation, le plateau étant proportionné pour être reçu dans le compartiment intérieur (44) pour son rangement lorsqu'il n'est pas utilisé et pour reposer sur la surface supérieure du chariot de distribution (40) entre les faces latérales (42, 43) lorsqu'il est utilisé; une première plaque (21, 22) de liaison d'une manière générale allongée rectangulaire articulée par un bord longitudinal à une paroi latérale (13, 14) du plateau; et un panneau publicitaire (25) articulé au bord longitudinal opposé de la plaque de liaison (21, 22), au moyen duquel le plateau (11) peut être rangé dans le compartiment (44) avec le panneau publicitaire (25) articulé à une position dans laquelle le panneau recouvre la base (12) du plateau, et en utilisation le plateau (11) est retiré du compartiment (44) et placé sur la surface supérieure (41) du chariot, et la plaque de liaison (21, 22) et le panneau publicitaire (25) sont articulés de sorte que le panneau publicitaire (25) est suspendu depuis la plaque de liaison en s'étendant le long d'une face latérale adjacente du chariot, au moyen duquel le panneau publicitaire (25) est exposé aux passagers assis dans le moyen de transport public.

2. Dispositif d'affichage (10) tel que revendiqué à la revendication 1, dans lequel la hauteur combinée de la plaque de liaison et de la paroi latérale (13) du plateau (11) à laquelle la plaque est articulée est sensiblement égale à la hauteur de la paroi d'extrémité adjacente du plateau, au moyen duquel le panneau publicitaire (25) peut être articulé à une position de rangement recouvrant les bords supérieurs des parois d'extrémités, espacées de la base.

3. Dispositif d'affichage (10) tel que revendiqué à la revendication 1 ou à la revendication 2 dans lequel la plaque de liaison comprend deux ou plus de deux panneaux de liaison articulés ensemble.

4. Dispositif d'affichage (10) tel que revendiqué dans l'une quelconque des revendications précédentes, dans lequel la forme et la taille du panneau publicitaire (25) correspondent sensiblement à la forme et à la taille de la base (12) du plateau (11).

5. Dispositif d'affichage (10) tel que revendiqué dans l'une quelconque des revendications précédentes, dans lequel une seconde plaque de liaison allongée articulée au bord supérieur de la paroi latérale opposée du plateau (11) est prévue, avec un second panneau publicitaire (26) articulé sur l'autre bord longitudinal de la seconde plaque de liaison allongée.

6. Dispositif d'affichage (10) tel que revendiqué à la revendication 5, dans lequel la hauteur combinée de la seconde plaque de liaison et de la paroi latérale opposée du plateau à laquelle la seconde plaque de liaison est articulée est sensiblement égale à la hauteur de la paroi d'extrémité adjacente du plateau, au moyen duquel le panneau publicitaire (25) peut être articulé à une position de rangement recouvrant les bords supérieurs des parois d'extrémité, espacées de la base (12).

7. Dispositif d'affichage (10) tel que revendiqué à la revendication 5 ou à la revendication 6 dans lequel la seconde plaque de liaison comprend deux ou plus de deux panneaux de liaison allongés articulés ensemble.

8. Dispositif d'affichage (10) tel que revendiqué à la revendication 4, dans lequel les deux panneaux publicitaires (25, 26) se recouvrent immédiatement l'un l'autre lorsqu'ils sont articulés à leur position de rangement respective.

9. Dispositif d'affichage (10) tel que revendiqué à l'une quelconque des revendications précédentes et pour son utilisation avec un chariot (40) ayant une paire de lèvres verticales s'étendant le long des bords opposés du sommet, dans lequel le plateau (11) a une largeur adaptée pour être reçue entre les lèvres verticales lorsqu'il est situé sur la surface supérieure, avec la ou chaque plaque de liaison s'étendant au dessus de la lèvre verticale adjacente.

10. Dispositif d'affichage (10) tel que revendiqué à l'une quelconque des revendications précédentes et comprenant en outre un insert pouvant être reçu dans le plateau (11), pour l'affichage ou le rangement de marchandises.

11. Dispositif d'affichage (10) tel que revendiqué à la revendication 8 dans lequel l'insert comprend une structure d'affichage du point de vente ayant un plateau intérieur à compartiments multiples avec des cloisons en élévation, ou un plateau à multi-niveaux adapté pour être plié entre des configurations allant de plate à multi-niveaux.

12. Dispositif d'affichage (10) tel que revendiqué à l'une quelconque des revendications précédentes, dans lequel est prévu un panneau indicateur, supporté par deux barres verticales attachées au plateau (11).

13. Dispositif d'affichage (10) tel que revendiqué à la revendication 12, dans lequel les barres verticales sont attachées de manière pivotante au plateau pour un mouvement articulé entre des positions érigée et rabattue.

14. Dispositif d'affichage (10) tel que revendiqué à la revendication 12, dans lequel les barres verticales sont attachées de manière pivotante à une paroi d'extrémité.

15. Dispositif d'affichage (10) tel que revendiqué à la revendication 12 à la revendication 14, dans lequel le panneau indicateur et les barres verticales pivotent pour s'étendre dans ou contre le plateau lorsqu'il n'est pas utilisé.

16. Dispositif d'affichage (10) tel que revendiqué à l'une quelconque des revendications précédentes, dans lequel au moins une paroi d'extrémité inclut un volet articulé au moyen duquel l'accès à l'intérieur du plateau peut être obtenu au travers d'une ouverture définie par l'articulation du volet.

17. En combinaison, un chariot (40) ayant une section transversale d'une manière générale horizontale rectangulaire et un compartiment interne pour le rangement de marchandises, une surface supérieure, et un dispositif d'affichage (10) tel que revendiqué à une quelconque des revendications 1 à 16, dans lequel le plateau (11) peut être reçu dans le compartiment interne du chariot (40), lorsque le ou chaque panneau publicitaire a été plié pour recouvrir la base (12) du plateau (11), le plateau pouvant être retiré du compartiment interne et placé sur la surface supérieure du chariot (40) lorsque le plateau n'est pas utilisé, avec le panneau publicitaire articulé pour être suspendu depuis la plaque de liaison en s'étendant le long d'une face adjacente du chariot, au moyen duquel le panneau publicitaire est exposé aux passagers assis dans le moyen de transport public.
